# EUROPEAN PATENT APPLICATION

(11) **EP 4 618 526 A1**
(43) Date of publication of application: **17.09.2025**
(21) Application number: 24163670.3
(22) Date of filing: 14.03.2024
(51) Int. Cl.: H04M 3/51

(54) **CALL MANAGEMENT**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A call management tool is described comprising a memory and a processor. The memory stores instructions which when executed by the processor implements a method of establishing a call via a communications network between an end user communications device and an agent, extracting metadata from the call, constructing a prompt using the metadata, sending the prompt to a large language model (LLM) and receiving a response to the prompt from the large language model, and triggering a next action using the response, where the next action manages the call.

## Description

The present disclosure relates to managing calls such as voice over internet protocol calls or other telecommunications calls between an agent and an end user.

### BACKGROUND

Manual methods are currently used to manage many calls such as voice over internet protocol calls or other telecommunications calls between an agent and an end user. Agents are typically working in real time as they receive calls from end users and have to manually deal with information from a variety of sources to rapidly manage the call. Because of the wide variety and large number of sources of information it is difficult for the agent to effectively manage the call. This leads to problems where agents make errors leading to poor call management, potential procedure breaches and waste of resources.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to an aspect of the disclosed technology there is a call management tool comprising:
a memory; and
a processor;
the memory storing instructions which when executed by the processor implement a method of:
   establishing a call via a communications network between an end user communications device and an agent;
   extracting metadata from the call;
   constructing a prompt using the metadata;
   sending the prompt to a large language model (LLM) and receiving a response to the prompt from the large language model;
   triggering a next action using the response, where the next action manages the call.

Using an LLM to trigger a next action during a call in real time is particularly effective for call management. An agent is able to better manage the call and there is improved accuracy in dealing with the call appropriately, such as blocking calls which are potentially fraudulent or malicious, forwarding calls appropriately and other actions. By extracting metadata from the call and using it to construct a prompt there is an efficient and effective way to manage a call using an LLM.

In various examples, sending the prompt comprises sending the prompt to a large language model that has been fine tuned using information associated with the metadata. Using a fine tuned large language model is an effective way to manage the call. The Large language model may have been fine tuned with information associated with the metadata including but not limited to: previous calls with the end user device such as duration of call, sentiment of audio content during the call, actions resulting from the call, information about an account associated with the end user device for services provided over the communications network, information about the end user device functionality and capability, information about previous faults and maintenance. Sending a prompt to a large language model that has been fine tuned using information associated with the metadata allows for the large language model to recall the information when producing an output without said information having to be included in the prompt. This produces a more efficient and streamlined process for call management and further reduces manual burden.

In various examples, the information associated with the metadata is from a plurality of diverse sources. The diverse sources may be different customer relationship management databases, billing databases, account logs and other sources. Having the information associated with the metadata be from such diverse sources is a particularly effective way of improving the efficiency of the agent. The agent is able to have access to many different types of information within one platform rather than searching each one of the plurality of information sources separately. This is especially helpful where the diverse sources are of different types and are to be queried in different ways. Further, in the case of fine tuning the large language model, the use of a plurality of diverse sources improves the accuracy and reliability of the large language model and in consequence the accuracy and reliability of the actions of the agent.

In various examples, constructing the prompt comprises augmenting the prompt with context, where the context is retrieved using the metadata from a plurality of different sources. Augmenting the prompt with context that has been retrieved using the metadata from a plurality of different sources is particularly effective in producing up-to-date and accurate responses from the LLM. Information changes with time, and in the case of fine tuned LLMs this means re-tuning the LLM using new data which is a complex and computationally expensive process. Augmenting the prompt with context that has been retrieved using the metadata from a plurality of different sources ensures the LLM has access to up-to-date data without having to re-train each time this data is updated. The prompt may ask the LLM to analyse the context or produce an answer taking into account the context.

In various examples, triggering the next action comprises any of: ending the call, transferring the call, joining another party to the call, offering candidate text to the agent to be spoken on the call, offering a suggested action to the agent based on an emotion of the end user indicated in the response, offering a suggested action to the agent based on a speech characteristic of the end user, offering a suggested action to the agent based on the extracted metadata, putting the call on hold, muting the agent, offering information on past calls with the end user to the agent. In an example the speech characteristic comprises any one or more of: speech rate, speech rhythm, loudness, intonation, intensity of overtones.

Having a variety of next actions to be triggered by the LLM in a call provide an improvement in efficiency and quality of work performed by the agent. In some cases the next actions are automated and are triggered in an automated manner. In some cases the next actions are offered as candidates to the agent for selection. Once a candidate action is selected instructions are sent to appropriate computing or telecommunications equipment to cause the action.

In various examples, constructing the prompt comprises selecting a prepared prompt from a database of prompts. Having a database of prompts to select a prepared prompt from saves the agent from having to manually think of and write out a prompt for the LLM during the live call. Hence, by selecting prepared prompts from a database of prompts there is a more effective and efficient way to manage calls.

In various examples, extracting metadata from the call comprises extracting a telephone number or other identifier of an account associated with the end user communications device. Extracting metadata comprising extracting a telephone number or other identifier of an account associated with the end user communications device provides an efficiency advantage in authentication or any other purpose where end user identification is needed. The telephone number or other identifier is usable to search for information to add as context into a prompt, or is given in a prompt itself where appropriate confidentiality and end user consent is available.

In various examples, constructing the prompt comprises adding text to the prompt, the text obtained by converting speech from the call into text. Converting the speech into text is achieved in an automated manner using a speech to text functionality such as Windows voice to text (trade mark), Otter.ai (trade mark), or any other automated speech recognition ASR technology. Constructing the prompt comprising adding text obtained by converting speech from call into text gives the agent the ability to better manage the call and a reduced manual burden as speech information is not manually entered by the agent.

In various examples, the large language model is a multi-modal large language model. The LLM being a multi-modal LLM maximises the number of information sources that can be used in creating the prompt and/or fine tuning the LLM, as not all information sources will be of the same format/mode.

In another aspect there is a computer-implemented method of managing a call comprising:
establishing a call via a communications network between an end user communications device and an agent;
extracting metadata from the call;
constructing a prompt using the metadata;
sending the prompt to a large language model and receiving a response to the prompt from the large language model;
triggering a next action using the response, where the next action manages the call.

Using a large language model to trigger a next action during a call in real time is particularly effective for call management. An agent is able to better manage the call and has reduced manual burden. By extracting metadata from the call and using it to construct a prompt there is an efficient and effective way to manage a call using an LLM.

In various examples, the computer-implemented method comprises, prior to sending the prompt, fine tuning the large language model using information associated with the metadata.

Sending a prompt to a large language model that has been fine tuned using information associated with the metadata allows for the large language model to recall the information when producing an output without said information having to be included in the prompt. This produces a more efficient and streamlined process for call management and further reduces manual burden. Further, fine tuning allows for an improvement in sentiment analysis capabilities of the large language model. An agent is able to produce more accurate results that are more in line with the requirements of the end user.

In various examples, the information associated with the metadata comprises any of: previous communications, previous calls, events, service faults, complaints, previous sentiment, frequency of change of account data, account data, service history. By using such a wide variety and type of information the process of triggering the action is improved.

In various examples, where the LLM response indicates the end user is not authenticated, a next action is triggered to terminate the call or divert the call to another party. Using a large language model to trigger a authentication related next action during a call in real time is particularly effective for security of end user information and for call management. An agent is able to terminate the call faster than it would be possible without the presence of an LLM triggering a next action, thus providing an advantage in time-sensitive security related situations such as a malicious end user trying to gain access to sensitive information by impersonating a genuine end user.

In various examples, where the response indicates the end user has changed their account data more than a threshold number of times, triggering a next action to alert the agent. Using a large language model to trigger a next action to alert the agent in the event of an end user changing account data more than a threshold amount of times is particularly effective for making the agent aware of potential malicious activity by the end user and will allow the agent to better manage the call. The frequent changing of end user account data may not be immediately obvious to the agent and so the use of an LLM to trigger a next action to alert the agent will improve response times to security related issues.

In various examples, the prompt comprises adding information to the prompt requesting the large language model to do one or more of: provide a summary of historical data associated with the metadata, provide input on the current conversation in the call, providing current sentiment of the end user, suggesting ways to improve a conversation on the call, provide a risk assessment, suggest actions based on the risk assessment, prove an authentication status, suggest actions based on the authentication status.

Including a request within the prompt is particularly effective for call management. An agent is able to better manage the call and has reduced manual burden. Pre prepared prompts for example requests are available as candidates for an agent to select from in some cases.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a call management tool deployed in a communications network and being used to manage a call with an end user;
FIG. 2A is a flow diagram of a method of fine-tuning a pre-trained large language model (LLM) for use with a call management tool such as that of FIG. 1;
FIG. 2B is a flow diagram of a method of retrieving context and using the retrieved context when prompting an LLM;
FIG. 3 is a flow diagram of a method performed by a call management tool such as that of FIG. 1;
FIG. 4 is a schematic diagram of a computing device for implementing a call management tool in some examples.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

Currently, methods of call management for calls such as voice over internet protocol calls or other telecommunications calls between an agent and an end user are largely manual. Further, the management of calls is typically performed by the agent in real time as the call between the agent and the end user takes place. Management of the calls typically requires information which can come from a variety of sources, such as the call itself, external databases and other data stores, and the agent will typically have to manually access a multitude of information sources while at the same time interacting with the end user and otherwise managing the call.

Because of the complexity of performing a significant amount of tasks at once, the quality of the call management may suffer via procedure breaches, waste of resources or the agent providing insufficient and incorrect information to the end user.

In addition to this, when dealing with malicious end users, agents will have to act in a time-sensitive manner to prevent the malicious end user from accessing sensitive information or performing any other malicious act. Unfortunately, whether the intentions of the end user are malicious or not is not always obvious, and the process of deciding if this is the case is only further delayed by the multitude of information sources and the manual nature of the call management.

One approach has been to use existing call management systems. However, these systems are generally expensive, generic, and not fine tuneable to the specific needs of call management tool users.

The present technology provides an automated way to manage calls between end users and agents. The technology is able to integrate information from a plurality of different sources in order to improve call management.

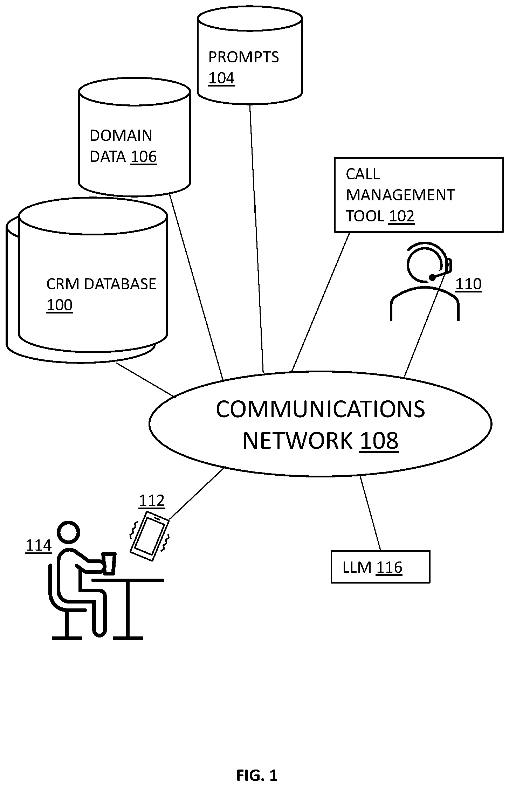

FIG. 1 is a schematic diagram of a call management tool 102 for use with a Large Language Model (LLM) 116 deployed in a communications network 108 and being used to manage a call between an agent 110 and an end user 114. In some cases the agent is a human operator in a call centre. In some cases the agent is fully computer implemented and may be integral with the call management tool 102. The end user 114 is a person operating end user device 112 such as a smart phone, smart watch, desktop voice over internet protocol call equipment or other end user device 112 able to establish a call with an agent 110 via communications network 108. Communications network 108 is the internet, a telecommunications network, or any other communications network. The end user 114 may have an account with a provider of services which are provided over communications network 108 such as voice mail services, video streaming services, telecommunications services or other services. In some cases the call management tool 102 is used by the provider of the services in order to give support to end users for trouble shooting, account management, security and more.

The call management tool 102 is computer implemented and comprises a user interface. The user interface may be a graphical user interface or a spoken user interface or any other type of user interface. The call management tool 102 is able to access, through the communications network 108, the LLM 116, an end user device 112, a plurality of customer relationship management (CRM) databases 100, a database of prompts 104 and a database of domain data 106.

The call management tool 102 may be deployed on an on premise server, a server in a data centre, or any other computing entity connected to communications network 108 and able to access calls between agents and end user devices. The functionality of the call management tool 102 is distributed between more than one computing entity in some cases. The call management tool 102 aims at ensuring that relevant and accurate information from the call, the end user device 112, the plurality of CRM databases 100, the database of domain data 106 and the database of prompts is provided to the agent 110. The call management tool 102 triggers an action for managing a call as explained in more detail below.

The LLM 116 is a machine learning model comprising a neural network with a transformer architecture enabling attention and self-attention. In some examples the LLM 116 has a billion or more parameters. A non-exhaustive list of examples of LLMs which may be used is: Llama, GPT 4, Bloom, Gemini, Mistral Large.

The plurality of CRM databases 100 are any stores of data such as any one or more of: a relational database, a graph database, a vector database. In some cases, one or more of the plurality of CRM databases 100 is distributed. In one example, the plurality of CRM databases 100 hold only data about customers of a telecommunications network service. The CRM databases 100 are different from one another such as by being of different types or holding different formats of data. In an example, one CRM database 100 holds end user account data, another holds billing data, another holds service outage and maintenance data.

The database of domain data 106 is any store of data such as any one or more of: a relational database, a graph database, a vector database. In some cases, the database of domain data 106 is distributed. In one example, the database of domain data 106 holds product manuals, information about bug patches and software updates, information about product releases, information about the CRM databases and other data.

The database of prompts 104 is any store of data such as any one or more of: a relational database, a graph database, a vector database. In some cases, the database of prompts 104 is distributed. In one example, the database of prompts 104 holds prepared prompts that may be offered as candidates for selection by an agent 110 or may be used by the call management tool 102.

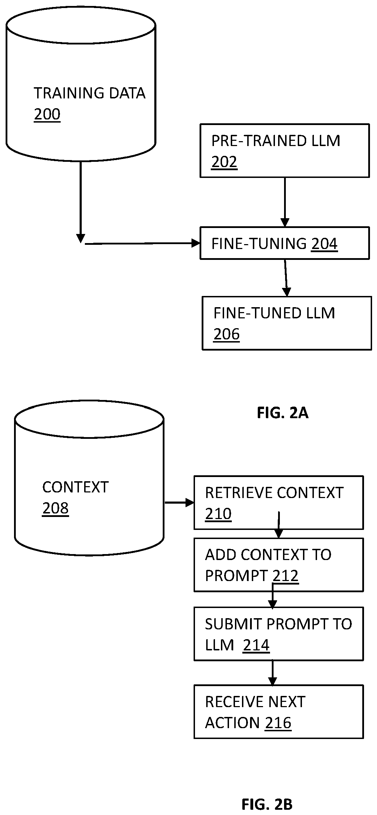

A call is established between the agent 110 and the end user 114 through the communications network 108. In one example, prior to the call, the LLM 116 is fine tuned using information from at least one of: the plurality of CRM databases 100, the database of domain data 106, previous calls between an agent and an end user device. More detail about the fine tuning is explained with reference to FIG. 2A. In another example, rather than fine tuning the LLM, the LLM 116 is prompted by including context in the prompt, where the context comprises information from at least one of: the plurality of CRM databases 100, the database of domain data 106, previous calls. More detail about using context is explained with reference to FIG. 2B.

FIG. 2A is a flow diagram of a method of fine-tuning a pre-trained large language model (LLM) 202 for use with a call management tool such as that of FIG. 1. A pre-trained large language model 202 is obtained such as Llama, Gemini, GPT 4, Bloom or other large language model. The large language model is pre-trained in that it has already been trained using vast quantities of training data in order to generate text; it has been trained in a generalist way not for only one particular domain. The pre-training comprises taking sequences of tokens such as words or parts of words and masking out one or more of the tokens. The LLM is then used to predict the masked tokens and since the ground truth values of these tokens are known, the LLM can be trained in a supervised fashion to minimise a loss function related to a difference between the predicted masked tokens and the known values of those tokens. Training is achieved via backpropagation. In some cases, after training using the sequences of tokens where one or more tokens are masked, the LLM is further trained using reinforcement learning. The training using reinforcement learning may use human feedback or feedback from a computer implemented reward function.

In order to fine tune the pre-trained LLM 202 training data 200 is used. The training data comprises labelled training examples, each training example comprising call data, about a call between an agent and an end user device 112, as well as one or more actions taken during the call and an outcome of the call.

The call data about the call between the agent and the end user device comprises one or more of: an identifier of the end user device, an identifier of an account associated with the end user device, speech characteristics observed during the call, a sentiment of the end user 114 during the call, the result of voice to text applied to the call, information from any of the CRM databases 100 associated with the end user device 112, information from the domain data 106 about the end user device 112 or services of an account associated with the end user device 112.

The actions taken during the call comprise one or more of: information given by the agent 110 during the call, whether the call was diverted or transferred, whether the call was terminated, whether changes to an account of the end user 114 occurred during the call, whether payment was received during the call, whether any changes were made to the services of an account associated with the end user device 112, for example, a change to the network settings for a broadband connection of the account to improve stability.

An outcome of the call may be a binary label indicating whether the outcome was successful or not. The labels are assigned by a human or are assigned automatically according to one or more criteria such as feedback from the end user 114, feedback from the agent 110, a duration of the call, sentiment analysis of the call, whether services of an account associated with the end user device 112 were retained, whether the end user 114 required further assistance after the end of the call.

The training examples 200 are used to fine tune 204 the pre-trained LLM 202 using supervised learning such as backpropagation via the Adam algorithm or other suitable training algorithm. The result is a fine tuned LLM 206. The fine tuned LLM 206 is deployed for use such as in the arrangement of FIG. 1 or any arrangement where the fine tuned LLM 206 is accessible to the call management tool 102.

By fine tuning the LLM with the training data 200 the fine-tuned LLM 206 is made bespoke to the domain (of domain data 106) and is tailored to the particular task of identifying a next action for an agent to manage a call between the agent 110 and an end user device 112. Thus when the call management tool 102 prompts the fine tuned LLM with a prompt comprising information about the call and asking for a recommended next action, the fine tuned LLM is able to generalise from the training data 200 and predict an accurate next action that is expected to give a positive outcome to the call.

FIG. 2B is a flow diagram of a method of retrieving context and using the retrieved context when prompting an LLM. The method of FIG. 2B is performed by the call management tool 102 in some examples. The call management tool 102 has access to context 208 since the call management tool 102 is able to access the CRM databases 100, the domain data 106 and the call itself. The call management tool 102 comprises a voice to text function such as an automated speech recognition ASR module, or is able to access an ASR service. The call management tool 102 uses the ASR module or service to convert speech signals from the call into text. The call management tool 102 is able to access metadata of the call such as a telephone number of the end user device 112 or an identifier of an account of the end user 114. The call management tool 102 uses the metadata of the call to search the CSR databases 100 for context such as information associated with the metadata, such as previous calls with the end user, history of an account of the end user, billing and whether the end user has paid their bills on time, faults experienced by the end user, subscriptions of the end user and other data. Thus the call management tool retrieves 210 context. The context is added 212 to a prompt by the call management tool. In some cases the prompt is a pre-prepared prompt or prompt template from prompts 104 store. The prompt comprises a request for the LLM to use the context and recommend a next action for a call between the agent 110 and the end user device 112. The LLM sends a response to the call management tool; thus the call management tool receives 216 the next action. In some cases the call management tool displays the next action at a user interface of the call management tool and the agent is able to review the next action and decide whether or not to take the next action, such as by speaking content on the call where the next action comprises content to speak on the call. In some cases the call management tool takes the next action automatically by sending instructions to the communications network to 108 to divert the call or terminate the call. In some cases the call management tool takes the next action automatically by sending instructions to the CRM database 100 to update data in the CRM database 100; for example, to add another service to an account of the end user, or to update an address of the end user, or to take a payment. In some cases, where the next action is to terminate the call such as where the end user device 112 is predicted to be engaged in potentially malicious or fraudulent behaviour, the call management tool 102 sends instructions to end the call automatically.

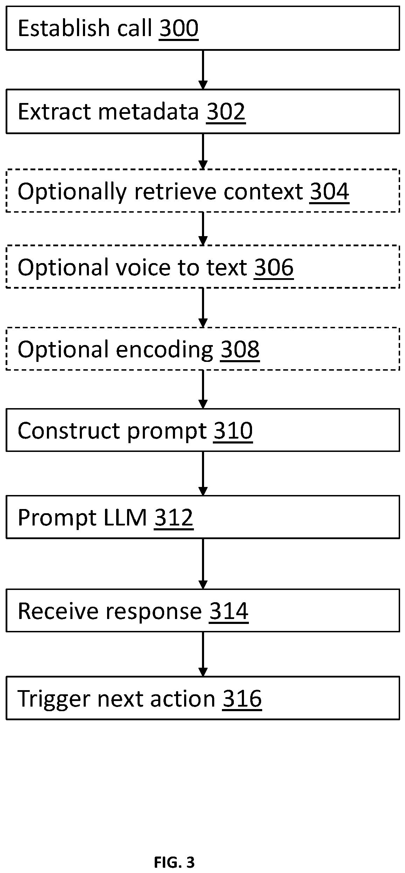

FIG. 3 is a flow diagram of a method performed by a call management tool 102 such as that of FIG. 1. The call management tool 102 establishes 300 a call between an agent 110 and an end user device 112. In an example the call is a voice over internet protocol call established through communications network 108. The call has metadata such as an identifier of the calling party, an identifier of the called party, information about a quality of service level to be applied to the call, or other metadata. The call management tool 102 extracts 302 metadata from the call such as by inspecting packet headers of packets of the call to obtain an identifier of the end user device 112 such as a telephone number or internet protocol address.

Optionally, the call management tool 102 retrieves 304 context as explained above with reference to FIG. 2B, from one or more different sources.

Optionally, the call management tool 102 converts 306 voice signals of the call to text. In some cases, the call management tool 102 encodes 308 voice signals of the call to a vector embedding rather than converting the voice signals to text. Any suitable encoder is used such as audio Word2Vec.

The call management tool 102 constructs 310 a prompt. In some cases the call management tool 102 constructs the prompt by selecting a prompt template from prompts 104 store and filling in fields of the prompt template with one or more of: data from the call, text from a voice to text function in operation 306, context retrieved in operation 304. The prompt may comprise a request for an LLM to generate a next action for the call.

In some cases the prompt comprises speech signal data from the call, or a vector embedding of a speech signal from the call computed using audio Word2Vec or similar. Where the prompt comprises speech signal data from the call, the LLM comprises an encoder to encode the speech signal data into a vector embedding suitable for input to the LLM; in this case the LLM is an LLM able to accept input in more than one modality, namely text and audio. The encoder may be audio Word2Vec.

Once the prompt is constructed the call management tool 102 prompts 312 the LLM with the prompt and waits to receive a response. The call management tool 102 receives 314 a response to the prompt. The response comprises a next action to manage the call. The call management tool triggers 316 the next action by one or more of: presenting or displaying the next action to the agent as a candidate for selection, sending an instruction to a node of the communications network to carry out the next action automatically, sending an instruction to the CRM database 100 to carry out the next action automatically. In cases where the agent is a computer the call management tool may trigger 316 the next action by generating a speech signal and sending the speech signal on the call. Any suitable technology is used to generate the speech signal such as the speech generator of Alexa (trade mark), or other speech from text tool.

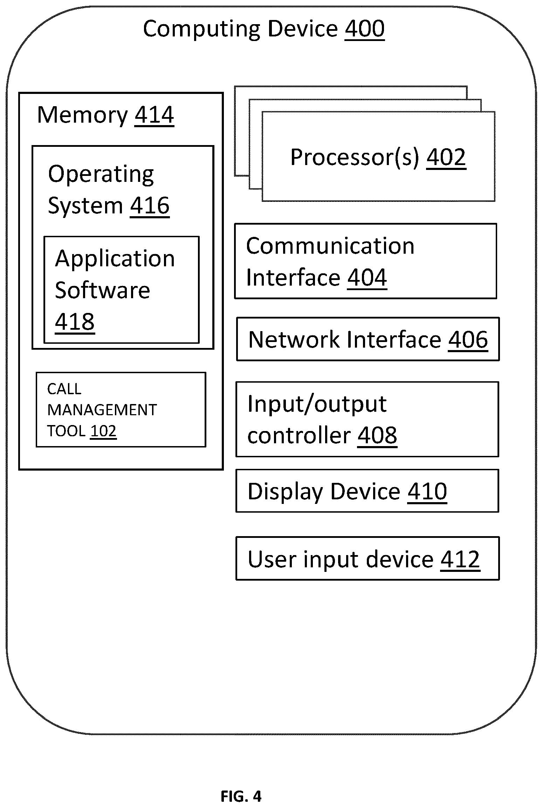

FIG. 4 illustrates various components of an example computing device 400 in which examples of a call management tool 102 may be implemented. The computing device is of any suitable form such as a compute node of a data centre, a server, an on-premise computer.

The computing device 400 comprises one or more processors 402 which are microprocessors, controllers or any other suitable type of processors for processing computer executable instructions to control the operation of the device in order to perform the methods of figures 2 and 3. In some examples, for example where a system on a chip architecture is used, the processors 402 include one or more fixed function blocks (also referred to as accelerators) which implement a part of the method of figures 2 and 3 in hardware (rather than software or firmware). That is, the methods described herein are implemented in any one or more of software, firmware, hardware. The computing device has a data store holding prompts, prompt templates, next actions, call metadata, historical data associated with the metadata and other data. The computing device has the call management tool 102 within a memory 414. Platform software comprising an operating system 416 or any other suitable platform software is provided at the computing-based device to enable application software 418 to be executed on the device. Although the computer storage media (memory 414) is shown within the computing-based device 400 it will be appreciated that the storage is, in some examples, distributed or located remotely and accessed via a network or other communication link (e.g. using communication interface 404).

The computing-based device 400 also comprises an input/output controller 408 arranged to output display information to a display device 410 which may be separate from or integral to the computing-based device 400. The display information may provide a graphical user interface. The input/output controller 408 is also arranged to receive and process input from one or more devices, such as a user input device 412 (e.g. a mouse, keyboard, camera, microphone or other sensor). In some examples the user input device 412 detects voice input, user gestures or other user actions. In an example the display device 410 also acts as the user input device 412 if it is a touch sensitive display device. The input/output controller 408 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A call management tool comprising:
a memory;
a processor;
the memory storing instructions which when executed by the processor implement a method of:
establishing a call via a communications network between an end user communications device and an agent;
extracting metadata from the call;
constructing a prompt using the metadata;
sending the prompt to a large language model and receiving a response to the prompt from the large language model;
triggering a next action using the response, where the next action manages the call.

2. The call management tool as claimed in claim 1, wherein sending the prompt comprises sending the prompt to a large language model that has been fine tuned using information associated with the metadata.

3. The call management tool as claimed in claim 2 wherein the information associated with the metadata is from a plurality of diverse sources.

4. The call management tool as claimed in claim 1 wherein constructing the prompt comprises augmenting the prompt with context, where the context is retrieved using the metadata from a plurality of different sources.

5. The call management tool as claimed in any preceding claim wherein triggering the next action comprises any of: ending the call, transferring the call, joining another party to the call, offering candidate text to the agent to be spoken on the call, offering a suggested action to the agent based on an emotion of the end user indicated in the response, offering a suggested action to the agent based on a speech characteristic of the end user, offering a suggested action to the agent based on the extracted metadata, putting the call on hold, muting the agent, offering information on past calls with the end user to the agent.

6. The call management tool as claimed in any preceding claim wherein constructing the prompt comprises selecting a prepared prompt from a database of prompts.

7. The call management tool as claimed in any preceding claim wherein extracting metadata from the call comprises extracting a telephone number or other identifier of an account associated with the end user communications device.

8. The call management tool as claimed in any preceding claim wherein constructing the prompt comprises adding text to the prompt, the text obtained by converting speech from the call into text.

9. The call management tool as claimed in any preceding claim wherein the large language model is a multi-modal large language model.

10. A computer-implemented method of managing a call comprising:
establishing a call via a communications network between an end user communications device and an agent;
extracting metadata from the call;
constructing a prompt using the metadata;
sending the prompt to a large language model and receiving a response to the prompt from the large language model;
triggering a next action using the response, where the next action manages the call.

11. A computer-implemented method as claimed in claim 10 comprising, prior to sending the prompt, fine tuning the large language model using information associated with the metadata.

12. The computer-implemented method as claimed in claim 11 wherein the information associated with the metadata comprises any of: previous communications, previous calls, events, service faults, complaints, previous sentiment, frequency of change of account data, account data, service history.

13. The computer implemented method of any of claims 10 to 12 comprising, where the response indicates the end user is not authenticated, triggering a next action to terminate the call or divert the call to another party.

14. The computer implemented method of any of claims 10 to 13 comprising where the response indicates the end user has changed their account data more than a threshold number of times, triggering a next action to alert the agent.

15. The computer implemented method of any of claims 10 to 14 wherein constructing the prompt comprises adding information to the prompt requesting the large language model to do one or more of: provide a summary of historical data associated with the metadata, provide input on the current conversation in the call, providing current sentiment of the end user, suggesting ways to improve a conversation on the call, provide a risk assessment, suggest actions based on the risk assessment, prove an authentication status, suggest actions based on the authentication status.
